# EUROPEAN PATENT APPLICATION

(11) **EP 4 694 267 A1**
(43) Date of publication of application: **11.02.2026**
(21) Application number: 24778736.9
(22) Date of filing: 09.02.2024
(51) Int. Cl.: H04W 12/42, G06Q 50/50, H04M 3/42, H04W 4/24, H04W 8/18, H04W 12/77, H04W 76/10, H04W 92/08

(54) **ESIM ACTIVATION SYSTEM AND PROGRAM**

(30) Priority: 27.03.2023 JP 2023049462
(71) Applicant: SKY CO., LTD, Tokyo 150-0021 (JP)
(72) Inventor: KIM, Peter, Tokyo 150-0021 (JP)
(74) Representative: Liesegang, Eva
(86) International application number: PCT/JP2024/004580
(87) International publication number: WO 2024/202591

(57) **Abstract**

Provided are an eSIM activation system and a program that allow a user to easily select an optimal mobile communication plan by making access for activation of an eSIM in one step. In the eSIM activation system and the program, an eSIM terminal device 2 performs an eSIM application, a user selects a mobile communication plan in correspondence with a usage state and a usage schedule and makes a payment, when an e-mail address of the user is input on a display screen of the eSIM terminal device 2, an activation server 1 transmits a URL of an activation site to a user terminal to which the e-mail address is set, a user terminal 3 accesses the activation site from the URL and inputs a one-time authentication code to display a two-dimensional barcode for installation on the user terminal 3, and when the two-dimensional barcode is read into a communication setting of the user terminal 3, activation is completed.

## Description

### Technical Field

The present invention relates to a system that activates an eSIM, and particularly, to an eSIM activation system and a program that simplify a procedure and improve convenience for a user.

### Background Art

### [Related Art]

The eSIM is a technology that enables data communication by using a communication function inside a smartphone without using a SIM card, and recent smartphones have the function.

As in the case of the SIM card that enables voice call and data communication by a contract with a communication carrier, the eSIM also enables data communication through activation by the communication carrier.

In a method of the activation, when a user selects an eSIM package product at a store, makes a payment in a person-to-person manner or at a vending machine, and reads a two-dimensional barcode printed in the package with a terminal of the user, a guidance site for guiding the user to an activation site is displayed (first-stage access).

Then, when the user inputs an e-mail address in the guidance site and performs transmission, a URL of the activation site is displayed in the e-mail address of the user. When the user inputs an authentication code such as a one-time password and accesses the URL (activation site) (second-stage access), a two-dimensional barcode for installation is displayed. Then, when the user reads the two-dimensional barcode for installation with a communication setting, the activation is completed.

That is, two-stage access including the first-stage access to the guidance site and the second-stage access to the activation site is required.

In addition, the user needs to purchase the package product by selecting a communication carrier in advance, and it is not easy to select an optimal mobile communication plan from the communication carriers in correspondence with a usage state and a usage schedule of the user.

### [Related Technology]

In addition, as related prior art documents, there are Japanese Patent Application Laid-Open No. 2012-109973, "Method and device for access control client support type roaming" (Patent Document 1), and Japanese Patent Application Laid-Open No. 2019-149188, "Server device, communication system, communication method, and program" (Patent Document 2).

Patent Document 1 discloses that a mobile device detects a roaming state, evaluates an available eSIM in response to the detection, and loads the eSIM to make the eSIM available in a case where the eSIM is suitable.

Patent Document 2 discloses a service for renting a real SIM card, in which a QR code (registered trademark) corresponding to a user ID distributed by usage registration is read, and the SIM card is discharged.

### Citation List

### Patent Documents

Patent Document 1: Japanese Patent Application Laid-Open No. 2012-109973
Patent Document 2: Japanese Patent Application Laid-Open No. 2019-149188

### Summary of the Invention

### Problems to be solved by the Invention

However, in a case where a package product of the eSIM in the related art is purchased, there is a problem that two-stage access is required for activation and an activation procedure is complicated.

Furthermore, in a case where the package product of the eSIM in the related art is purchased, a product selected in advance is purchased, and there is a problem that it is difficult for a user to select an optimal mobile communication plan.

It should be noted that Patent Document 1 and Patent Document 2 do not describe a configuration in which access for activation of the eSIM is performed in one step by using a terminal device different from the user terminal so that the user can easily select the optimal mobile communication plan.

The present invention has been made in view of the above circumstances, and an object of the present invention is to provide an eSIM activation system and a program that allow a user to easily select an optimal mobile communication plan by making access for activation of an eSIM in one step.

### Means for solving the Problems

The present invention has been made to solve the above-described problem of the related art. According to an aspect of the invention, there is provided an eSIM activation system including: an activation server configured to activate an eSIM of a mobile terminal; and a terminal device connected to the activation server, in which the activation server receives an eSIM application of a user from the terminal device, provides a mobile communication plan to the terminal device, gives a notification of a link of an activation site with a user's e-mail address input from the terminal device when the plan is selected and purchased on the terminal device, causes a user terminal of the user to display a two-dimensional barcode for activating the eSIM when the user terminal accesses the link, and activates the eSIM of the user terminal when the two-dimensional barcode is read by a communication setting of the user terminal.

In the activation system, the activation server may cause the user terminal to input the authentication code transmitted at the time of notification of the link when the user terminal accesses the link of the activation site.

In the activation system, when receiving the eSIM application, the activation server may cause the terminal device to input a usage period and a use capacity of the mobile communication plan, and may provide a plurality of mobile communication plans to the terminal device in correspondence with the input to be selected and purchased.

In the activation system, when causing the user terminal to display the two-dimensional barcode, the activation server may cause the terminal device to which the e-mail address is input to print and output the two-dimensional barcode.

According to another aspect of the invention, there is provided a processing program that operates on an activation server configured to activate an eSIM of a mobile terminal, the program causing the activation server to function to: receive an eSIM application of a user from a terminal device and provide a mobile communication plan to the terminal device; give a notification of a link of an activation site with a user's e-mail address input from the terminal device when the plan is selected and purchased on the terminal device; cause a user terminal of the user to display a two-dimensional barcode for activating the eSIM when the user terminal accesses the link; and activate the eSIM of the user terminal when the two-dimensional barcode is read by a communication setting of the user terminal.

In the program, the activation server may be caused to function to cause the user terminal to input an authentication code transmitted at the time of notification of the link when the user terminal accesses the link of the activation site.

In the program, when receiving the eSIM application, the activation server may be caused to function to cause the terminal device to input a usage period and a use capacity of the mobile communication plan, and may provide a plurality of mobile communication plans to the terminal device in correspondence with the input to be selected and purchased.

In the program, when causing the user terminal to display the two-dimensional barcode, the activation server may be caused to function to cause the terminal device to which the e-mail address is input to print and output the two-dimensional barcode.

### Advantageous Effect of the Invention

According to the present invention, since the activation server receives the eSIM application of the user from the terminal device, provides the mobile communication plan to the terminal device, gives a notification of the link of the activation site with the user's e-mail address input from the terminal device when the plan is selected and purchased on the terminal device, causes the user terminal to display the two-dimensional barcode for activating the eSIM when the user terminal accesses the link, and activates the eSIM of the user terminal when the two-dimensional barcode is read by the communication setting of the user terminal, the eSIM activation system and program can realize the activation of the eSIM of the user terminal with easy access by using the terminal device.

### Brief Description of the Drawings

FIG. 1 is a schematic configuration diagram of a system.
FIG. 2 is a configuration block diagram of an eSIM terminal device.
FIG. 3 is a process flow diagram of a first half in the system.
FIG. 4 is a process flow diagram of a latter half in the system.

### Mode for carrying out the Invention

An embodiment of the present invention will be described with reference to the drawings.

### [Outline of Embodiment]

In an eSIM activation system (the present system) according to the embodiment of the present invention, an operator of an activation server performs an application for eSIM usage (eSIM application) with an eSIM terminal device installed, a user selects a mobile communication plan in correspondence with a usage state and a usage schedule, and makes a payment. When an e-mail address of the user is input on a display screen of the eSIM terminal device, the activation server transmits an access destination (URL: Uniform Resource Locator) of an activation site to a user terminal to which the e-mail address is set, the user terminal accesses the activation site from the URL (first-stage access), and inputs a one-time authentication code to display a two-dimensional barcode for installation on the user terminal. When the two-dimensional barcode is read into a communication setting of the user terminal, activation is completed. Therefore, it is possible to easily realize activation of the eSIM on the user terminal with a one-stage access by using the eSIM terminal device.

In addition, the present system recommends an optimal mobile communication plan in correspondence with the usage state and the usage schedule of the mobile communication of the user when selecting the mobile communication plan of the user, and the user can easily select the optimal mobile communication plan.

That is, the user can compare and examine a plurality of plans in correspondence with the communication state before purchasing the eSIM, and then purchase the eSIM and immediately activate the user terminal to be available.

In addition, the present system can easily realize the activation of the eSIM for the mobile communication plan in a plurality of countries by using a single eSIM terminal device when the user travels to a plurality of foreign countries.

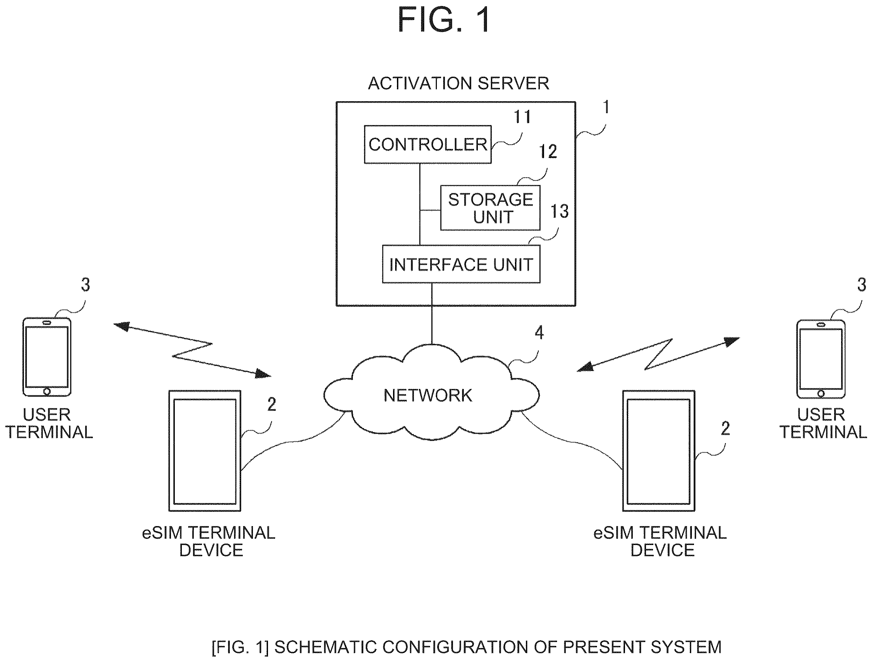

### [Present System: FIG. 1]

The present system will be described with reference to FIG. 1. FIG. 1 is a schematic configuration diagram of the present system.

As illustrated in FIG. 1, the present system includes an activation server 1, an eSIM terminal device 2, a user terminal 3 such as a smartphone or a tablet of a user, and a network 4.

The eSIM terminal device 2 is provided at an airport, a station, or the like, is connected to the activation server 1 via the network 4, and is managed by an operating company that manages the activation server 1.

### [Each Unit of Present System]

Each unit of the present system will be described.

### [Activation Server 1]

The activation server 1 includes a controller 11, a storage unit 12, and an interface unit 13, and issues an activation code or the like for activating an eSIM in the user terminal 3 by using the eSIM terminal device 2.

The storage unit 12 stores a processing program for a process of issuing an activation code or the like, and stores data, parameters, and the like necessary for the process. The necessary data includes a plurality of mobile communication plans (including fees), user information (including an e-mail address) corresponding to an application ID, payment information, and the like.

The controller 11 executes the processing program stored in the storage unit 12 to realize the process of issuing the activation code and the like.

The interface unit 13 is an interface unit that connects the activation server 1 to the network 4.

The activation server 1 provides the mobile communication plan of an optimal communication carrier to the eSIM terminal device 2 in correspondence with the usage schedule (usage schedule period) and the usage state (communication capacity of usage schedule) of the eSIM of the user. In providing the mobile communication plan, it is easy for the user to select not only a plan with a desired communication capacity but also a plan with a capacity before and after the desired communication capacity with a price.

In addition, the activation server 1 performs a payment process for eSIM purchase by using a credit card, electronic money, or the like via the eSIM terminal device 2.

Further, the activation server 1 performs the process of issuing the activation code or the like, which will be described later.

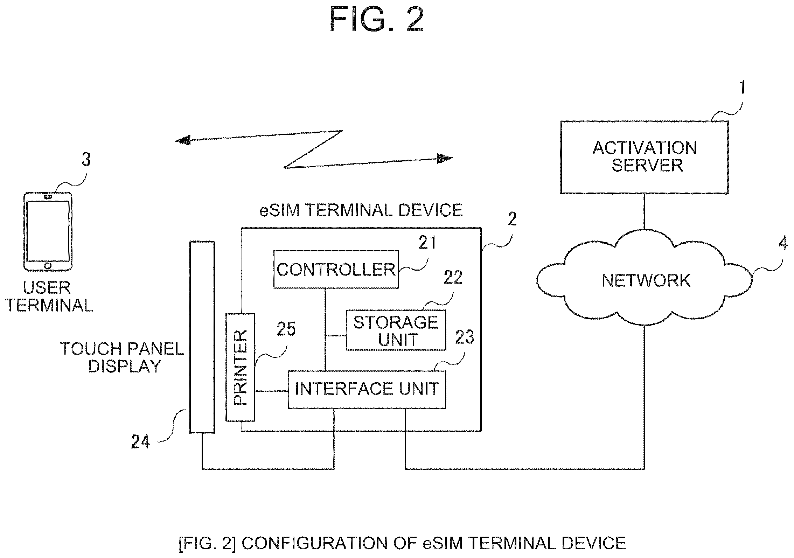

### [eSIM Terminal Device 2: FIG. 2]

Next, the eSIM terminal device will be described with reference to FIG. 2. FIG. 2 is a configuration block diagram of the eSIM terminal device.

The eSIM terminal device 2 is a terminal device that is installed in an airport, a station, or the like and is managed by an operating company of the activation server 1.

As illustrated in FIG. 2, the eSIM terminal device 2 includes a controller 21, a storage unit 22, an interface unit 23, a touch panel display 24, and a printer (printing device) 25.

The storage unit 22 stores a processing program for operating the eSIM terminal device 2.

The interface unit 23 is an interface unit that is connected to the network 4 and is connected to the touch panel display 24 and the printer 25.

The touch panel display 24 has functions of a display unit and an input unit, prompts the user to input a usage schedule and a usage state, displays an optimal mobile communication plan for the user, displays a payment screen, and prompts the user to input an e-mail address.

In a case where the user does not recognize the own mobile communication usage state, the user may be asked to input a usual network usage content and a usage time in a questionnaire manner, and an appropriate capacity may be recommended.

The printer 25 prints and outputs a two-dimensional barcode for activating the eSIM, which will be described later, on paper.

When the user selects and inputs the usage schedule (usage period: from ○ month/o day to Δ month/Δ day) and the usage state (communication capacity: ∘ Mbytes or Δ Gbytes or the like) of the eSIM on the touch panel display 24, the controller 21 transmits the usage schedule and the usage state input from the user to the activation server 1 via the interface unit 23.

The controller 21 is provided with an optimal mobile communication plan from a plurality of usage communication carriers in correspondence with the usage schedule and the usage state of the user from the activation server 1, and displays the mobile communication plan on the touch panel display 24. Even in a case where the same communication carrier is used, an optimal plan is submitted from a plurality of plans.

When the user selects the mobile communication plan provided with the touch panel display 24, the controller 21 displays a payment screen on the touch panel display 24, prompts the user to make a payment, and performs a payment process with a credit card or the like. In the payment process, credit payment may be performed at a credit card insertion port of the eSIM terminal device 2, or electronic payment may be performed by reading a two-dimensional barcode for electronic payment with a two-dimensional barcode reading device of the eSIM terminal device 2.

When the payment process is terminated, the controller 21 displays an input screen for inputting an e-mail address used in the user terminal 3 on the touch panel display 24, and encrypts the e-mail address and transmits the encrypted e-mail address to the activation server 1 when the e-mail address is input.

When transmitting the e-mail address to the activation server 1, the eSIM terminal device 2 also transmits an ID of the eSIM terminal device 2 to which the e-mail address is input.

After that, the activation server 1 and the user terminal 3 perform the process of issuing the activation code or the like.

### [User Terminal 3]

The user terminal 3 is a terminal of a user who purchases and activates the eSIM, and is assumed to be a smartphone, a tablet, or the like.

When the user terminal 3 accesses (first-stage access) an access destination (URL) of an activation site transmitted to the e-mail address input by the eSIM terminal device 2 from the activation server 1 by inputting a one-time authentication code, a two-dimensional barcode for activating the eSIM is issued and displayed, and when the two-dimensional barcode is read into the communication setting of the user terminal 3, the activation code and the like are set in the communication setting, and the purchased eSIM is activated. That is, the activation is realized by one-stage access.

In the user terminal 3, when the two-dimensional barcode issued on a communication setting screen is read, the eSIM is activated, but when the two-dimensional barcode cannot be read on the communication setting screen, the setting of the activation code or the like is manually performed.

In general, the two-dimensional barcode is displayed on a personal computer, and the two-dimensional barcode is activated when the two-dimensional barcode is read by a camera of the user terminal 3 on the communication setting screen.

However, when displaying the two-dimensional barcode on a display screen of the user terminal 3 and transitioning to the communication setting screen of the own user terminal 3, the two-dimensional barcode is not displayed, and the two-dimensional barcode cannot be read on the communication setting screen, so that the operation is manually performed.

In the user terminal 3, when "manual" setting is selected on a lower side of the screen on which the two-dimensional barcode is displayed, in a case of an Android (registered trademark) terminal, a code (activation code) provided from a provider is set on the communication setting screen by copy and paste, and in a case of an iPhone, an SM-DP+ address and the activation code are set on the communication setting screen by copy and paste.

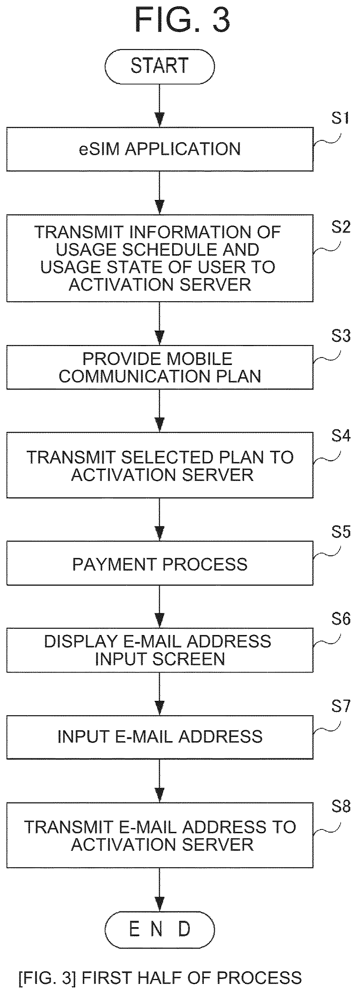

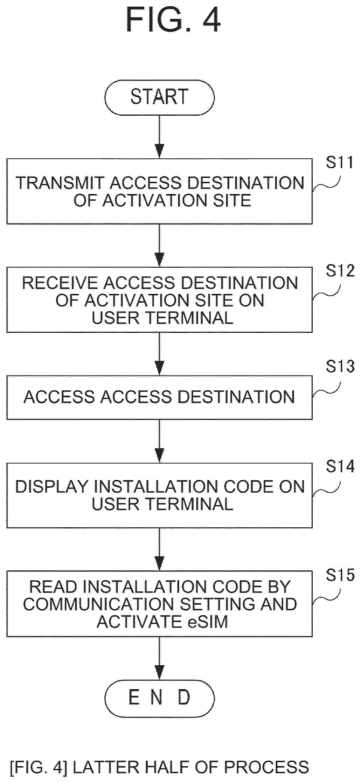

[Process of Present System: FIGS. 3 and 4] Next, a process of the present system will be described with reference to FIGS. 3 and 4. FIG. 3 is a process flow diagram of a first half in the present system, and FIG. 4 is a process flow diagram of a second half in the present system.

In the process of the present system, as illustrated in FIG. 3, the user performs the eSIM application on the display screen of the eSIM terminal device 2 (S1).

When the eSIM application is performed, the eSIM terminal device 2 transmits the eSIM application to the activation server 1, and the activation server 1 assigns an application ID.

Further, when a usage schedule and a usage state of a user related to the application are input, the eSIM terminal device 2 transmits the information and the application ID to the activation server 1 (S2).

The activation server 1 transmits a mobile communication plan and an application ID of an optimal communication carrier to the eSIM terminal device 2 with respect to the information, and provides the mobile communication plan to the touch panel display 24 of the eSIM terminal device 2 (S3).

When the mobile communication plan is selected by the user, the eSIM terminal device 2 transmits the selected plan and the application ID to the activation server 1 (S4).

Then, the activation server 1 displays a payment screen for eSIM purchase, which makes a request for payment of the fee for the plan, on the touch panel display 24 of the eSIM terminal device 2 and performs a payment process (S5). In the payment process, the activation server 1 stores payment completion for the communication plan corresponding to the application ID.

Next, when the payment for the eSIM purchase is completed, an input screen for inputting the e-mail address used in the user terminal 3 is displayed on the display screen of the touch panel display 24 of the eSIM terminal device 2 (S6).

Then, when the e-mail address of the user is input to the touch panel display 24 (S7), the eSIM terminal device 2 transmits the input e-mail address and the application ID to the activation server 1 (S8). After that, a process is performed between the activation server 1 and the user terminal 3.

Next, as illustrated in FIG. 4, the activation server 1 transmits the access destination (URL) of the activation site and the one-time authentication code to the eSIM terminal device 2 with the e-mail address (S11).

When receiving the access destination of the activation site and the authentication code with the e-mail address that is used (S12), the user terminal 3 accesses the access destination and inputs the authentication code on the site of the access destination (S13).

When the authentication code for the access destination is authenticated in the activation server 1, the user terminal 3 displays a two-dimensional barcode (installation code) of the activation code (S14). When the activation code or the like is set in the communication setting and the user terminal 3 reads the installation code on the communication setting screen, the purchased eSIM is activated (S15).

As described above, the activation is completed.

Next, additional functions of the present system will be described.

### [Printing Function of eSIM Terminal Device]

The printer 25 of the eSIM terminal device 2 operates the eSIM terminal device 2 to print the two-dimensional barcode for activation on paper and provide the printed paper to the user who has purchased the eSIM.

In the present system, it is necessary for the user terminal 3 to access the activation server 1 to display the two-dimensional barcode for activation, and to read the two-dimensional barcode on the communication setting screen. However, as described above, it is difficult to read the displayed two-dimensional barcode with an internal application, and a manual setting operation is required, which is a troublesome task for a user who is not familiar with the operation.

Therefore, at timing at which the activation server 1 causes the user terminal 3 of the user to display the two-dimensional barcode for activation, the two-dimensional barcode is printed and output on paper by the printer 25 of the eSIM terminal device 2 to which the e-mail address of the user is input.

That is, since the activation server 1 receives the ID of the eSIM terminal device 2 input in correspondence with the e-mail address, the printer 25 of the eSIM terminal device 2 is caused to print the two-dimensional barcode of the ID.

The user reads the two-dimensional barcode for activation printed on paper with the camera of the user terminal 3 to execute the activation of the eSIM.

In the user terminal 3, in a case where a communication environment such as WiFi is provided, the activation can be slowly performed by reading the two-dimensional barcode for activation printed on paper later, and it is possible to avoid congestion caused by a queue in front of the eSIM terminal device 2.

The two-dimensional barcode that has been activated once becomes invalid thereafter.

### [Local Carrier and Roaming Carrier]

In the present system, when providing a service of the eSIM to the user, service contents of a service of a local carrier providing the eSIM service and a service of an e-roaming carrier are displayed on the touch panel display 24 of the eSIM terminal device 2 such that both the services can be compared with each other.

In general, the service of the roaming carrier has a low fee but low quality, the service of the local carrier has a high fee but high quality, and the touch panel display 24 of the eSIM terminal device 2 displays the fee and the quality (for example, the quality is displayed by a mark or a numerical value in a five-stage evaluation) so that the fee and the quality can be compared with each other.

### [Tourist Information and the Like]

In the present system, when the activation server 1 transmits the access destination of the activation site to the user terminal 3, tourist information for the destination may be displayed or attached to the e-mail.

In addition, the activation server 1 may print the tourist information for the destination on the printed paper of the two-dimensional barcode of the eSIM terminal device 2.

The eSIM terminal device 2 may be provided with a camera, the user may be imaged with the camera, a captured image may be combined with a famous image or another image of a tourist spot, and the combined image may be attached to an e-mail to be transmitted to the user terminal 3, or may be printed on paper.

A technique of augmented reality (AR) is used for the image processing. AR is a technique of creating a virtual space in the real world by combining digital information (CG) and an actually existing image or video (real world).

Further, the activation server 1 may provide a tourist site, other photos, and illustrations instead of the tourist information.

In particular, in a case where art data such as an illustration is attached to the e-mail, the activation server 1 is provided as a non-fungible token (NTF).

The NTF is non-fungible digital data created based on a blockchain.

### [Processing Method in Present System]

In addition, a method of activating an eSIM of a mobile terminal can be described as follows.

The method of activating the eSIM of the mobile terminal includes receiving an eSIM application of a user from a terminal device and providing a mobile communication plan to the terminal device by an activation server, giving a notification of a link of an activation site with a user's e-mail address input from the terminal device when the plan is selected and purchased at the terminal device, causing a user terminal of the user to display a two-dimensional barcode for activating the eSIM when there is an access to the link from the user terminal, and activating the eSIM of the user terminal when the two-dimensional barcode is read by the communication setting of the user terminal.

In addition, in the processing method, the activation server is caused to input an authentication code transmitted at the time of notification of the link when the user terminal accesses the link of the activation site.

In addition, in the processing method, the activation server is caused to input a usage period and a use capacity of a mobile communication plan in receiving the eSIM application, and to provide a plurality of mobile communication plans to the terminal device in correspondence with the input to select and purchase the mobile communication plan.

### [Effect of Embodiment]

According to the present system, when the eSIM application is performed with the eSIM terminal device 2, the user selects a mobile communication plan in correspondence with a usage state and a usage schedule and makes a payment, and the e-mail address of the user is input on the display screen of the eSIM terminal device 2, the activation server 1 transmits the URL of the activation site to the user terminal to which the e-mail address is set, the user terminal 3 accesses the activation site from the URL, inputs the one-time authentication code to display the two-dimensional barcode for installation on the user terminal 3, and reads the two-dimensional barcode into the communication setting of the user terminal 3, so that the activation is completed. Therefore, there is an effect that the activation of the eSIM can be easily realized with one-stage access by using the eSIM terminal device 2.

In addition, according to the present system, when selecting the mobile communication plan of the user, an optimal mobile communication plan is recommended in correspondence with the usage state and the usage schedule of the mobile communication of the user, there is an effect that the user can easily select the optimal mobile communication plan.

In addition, according to the present system, when the user travels to a plurality of foreign countries, there is an effect that the activation of the eSIM in the mobile communication plan in the plurality of countries can be easily realized by using a single eSIM terminal device 2. Industrial Availability

The present invention is suitable for an eSIM activation system and a program that allow a user to easily select an optimal mobile communication plan by making access for activation of the eSIM in one step.

### Description of Reference Numerals

- 1:: activation server
- 2:: eSIM terminal device
- 3:: user terminal
- 11:: controller
- 12:: storage unit
- 13:: interface unit
- 21:: controller
- 22:: storage unit
- 23:: interface unit
- 24:: touch panel display
- 25:: printer (printing device)

## Claims

1. An eSIM activation system, comprising:
an activation server configured to activate an eSIM of a mobile terminal; and
a terminal device connected to the activation server,
wherein the activation server receives an eSIM application of a user from the terminal device, provides a mobile communication plan to the terminal device, gives a notification of a link of an activation site with a user's e-mail address input from the terminal device when the plan is selected and purchased on the terminal device, causes a user terminal of the user to display a two-dimensional barcode for activating the eSIM when the user terminal accesses the link, and activates the eSIM of the user terminal when the two-dimensional barcode is read by a communication setting of the user terminal.

2. The activation system according to Claim 1, wherein the activation server causes the user terminal to input an authentication code transmitted at the time of notification of the link when the user terminal accesses the link of the activation site.

3. The activation system according to Claim 1 or 2, wherein when receiving the eSIM application, the activation server causes the terminal device to input a usage period and a use capacity of the mobile communication plan, and provides a plurality of mobile communication plans to the terminal device in correspondence with the input to be selected and purchased.

4. The activation system according to Claim 1 or **2,** wherein when causing the user terminal to display the two-dimensional barcode, the activation server causes the terminal device to which the e-mail address is input to print and output the two-dimensional barcode.

5. A processing program that operates on an activation server configured to activate an eSIM of a mobile terminal, the program causing the activation server to function to:
receive an eSIM application of a user from a terminal device and provide a mobile communication plan to the terminal device; give a notification of a link of an activation site with a user's e-mail address input from the terminal device when the plan is selected and purchased on the terminal device; cause a user terminal of the user to display a two-dimensional barcode for activating the eSIM when the user terminal accesses the link; and activate the eSIM of the user terminal when the two-dimensional barcode is read by a communication setting of the user terminal.

6. The program according to Claim 5, wherein the activation server is caused to function to cause the user terminal to input an authentication code transmitted at the time of notification of the link when the user terminal accesses the link of the activation site.

7. The program according to Claim 5 or 6, wherein when receiving the eSIM application, the activation server is caused to function to cause the terminal device to input a usage period and a use capacity of the mobile communication plan, and to provide a plurality of mobile communication plans to the terminal device in correspondence with the input to be selected and purchased.

8. The program according to Claim 5 or 6, wherein when causing the user terminal to display the two-dimensional barcode, the activation server is caused to function to cause the terminal device to which the e-mail address is input to print and output the two-dimensional barcode.
